# EUROPÄISCHE PATENTSCHRIFT

(11) **EP 3 227 019 B1**
(45) Veröffentlichungstag und Bekanntmachung des Hinweises auf die Patenterteilung: **09.01.2019**
(21) Anmeldenummer: 15800799.7
(22) Anmeldetag: 24.11.2015
(51) Int. Cl.: B01J 23/46, B01J 23/652, B01J 21/06, B01J 21/08, B01D 53/86, B01J 37/00, B01J 37/02

(54) **RHODIUMKATALYSATOR ZUR ZERSETZUNG VON LACHGAS, DESSEN HERSTELLUNG UND VERWENDUNG**
RHODIUM CATALYST FOR DECOMPOSING NITROUS OXIDE, THE PRODUCTION THEREOF, AND THE USE THEREOF
CATALYSEUR AU RHODIUM POUR LA DÉCOMPOSITION DE GAZ HILARANT, SA FABRICATION ET SON EMPLOI

(30) Priorität: 03.12.2014 EP 14196025
(43) Veröffentlichungstag der Anmeldung: 11.10.2017
(73) Patentinhaber: BASF SE, 67056 Ludwigshafen am Rhein (DE)
(72) Erfinder: DEUERLEIN, Stephan, 67141 Neuhofen (DE); BEBENSEE, Regine Helga, 67061 Ludwigshafen (DE); WÜRZ, Harald, 67480 Edenkoben (DE); STELLA, Denis, 67105 Schifferstadt (DE); SPIEGEL, Andreas, 67227 Frankenthal (DE)
(74) Vertreter: BASF IP Association
(86) Internationale Anmeldenummer: PCT/EP2015/077524
(87) Internationale Veröffentlichungsnummer: WO 2016/087269

(56) Entgegenhaltungen:
- WO-A1-03/092887
- WO-A1-2012/052835
- DE-A1-102008 048 159
- US-A1- 2010 300 061
- S C Christoforou ET AL: "Catalytic conversion of N2O to N2 over metal-based catalysts in the presence of hydrocarbons and oxygen", Catalysis Letters, 1. April 2002 (2002-04-01), Seiten 137-147, XP055244629, DOI: 10.1023/A:1015360425678 Gefunden im Internet: URL:http://rd.springer.com/content/pdf/10. 1023/A:1015360425678.pdf [gefunden am 2016-01-25] in der Anmeldung erwähnt

## Beschreibung

Die vorliegende Erfindung betrifft einen Katalysator zur Zersetzung von Lachgas sowie ein Verfahren zu seiner Herstellung und seine Verwendung.

Lachgas (N₂O) ist ein Treibhausgas mit einem etwa 310 mal höheren molekularen Treibhauspotential als Kohlendioxid. Der größte Teil des von Menschen gemachten Lachgases kommt aus der Landwirtschaft, daneben werden aber auch größere Mengen N₂O in der chemischen Produktion u. a. bei der Herstellung von Salpetersäure und Adipinsäure frei. Zur Verringerung der Lachgasemissionen aus chemischen Produktionsprozessen sind verschiedene katalytische Verfahren bekannt. Zum einen gibt es die selektive katalytische Reduktion des Lachgases mit Hilfe eines Reduktionsmittels, zum anderen auch die direkte katalytische Zersetzung in Sauerstoff und Stickstoff. Durch die Verwendung eines Reduktionsmittels sind die verwendeten Katalysatoren bereits bei relativ niedrigen Temperaturen hinreichend aktiv. Entsprechende Verfahren und Systeme sind kommerziell erhältlich (DE 10001539 B4, EP 1269040 B1, EP 1257347 B1, EP 1370342 B1, EP 1372827 B1, EP 1497014 B1, US 7,462,340 B2, US 7,744,839 B2, WO 2009/021586 A1, Perbandt et al., Chem. Ing. Techn. 2013, Bd. 85, No. 5, Seiten 705 bis 709). Die direkte katalytische Zersetzung von Lachgas hat den Vorteil, dass weder Kosten für Reduktionsmittel noch Emissionen durch unverbrauchtes Reduktionsmittel oder Nebenreaktionen des Reduktionsmittels entstehen. Allerdings sind bekannte Katalysatoren zur Verwendung im Abgasstrom z. B. einer Salpetersäurefabrik ohne Zugabe eines Reduktionsmittels bei Temperaturen unter 400 °C nicht aktiv genug.

JP 05-103953 beschreibt eine Methode zur simultanen Abreicherung von nitrosen Gasen (NO, NO₂ = NOₓ) und N₂O in einem Abgasstrom, welchem Kohlenwasserstoffe zugegeben werden und er dann über einen Katalysator geleitet wird. Der Katalysator besteht aus mindestens einem der Elemente Cu, Ag, Cr, Fe, Co, Ni, Ru, Rh und Ir auf verschiedenen Metalloxiden als Träger.

JP 2010242614 beschreibt eine Methode um Lachgas aus dem Abgasstrom eines Verbrennungsmotors zu entfernen, bei der das Abgas, welches 1 bis 10 Äquivalente CO (in Bezug auf N₂O) enthält, über einen Katalysator geleitet wird. Der Katalysator umfasst Edelmetalle (Pt mit Pd oder Rh) auf einem Metalloxidträger (Al₂O₃, TiO₂ oder CeO₂), welcher als eine weitere Komponente Zirkondioxid oder Siliziumdioxid enthalten kann.

JP 2007152263 offenbart einen DeNOx Katalysator, welcher neben einem Alkalimetall und einem Erdalkali- oder Seltenenerdemetall eines der folgende Elemente enthält: Ni, Cu, Co, Fe, Ag, Ru, Rh, Pt, Au, Pd oder Ir. Der Träger besteht aus einem porösen Metalloxid mit einem Porenvolumen von 0,1 bis 0,6 ml/g. Metalloxide sind Titandioxid, Aluminiumoxid, Siliziumdioxid oder Zirkondioxid.
In der Literatur ist Rh auf verschiedenen Metalloxiden als Katalysator für die Lachgaszersetzung bekannt. Die meisten der untersuchten Systeme sind allerdings unter den Bedingungen, die in einem Abgasstrom einer Industrieanlage herrschen (Präsenz von geringen Mengen von Wasser und Sauerstoff), nicht aktiv genug.

Christoforou et al. (Catalysis Letters 2002, Vol. 79, Seiten 137 bis 147) beschreiben Katalysatoren zur Lachgaszersetzung, bei denen verschiedene Metalle auf oxidische Träger aufgetränkt wurden. Auf einem Aluminiumoxidträger zeigten Ru und Rh enthaltende Katalysatoren die besten Umsätze. Katalysatoren mit Rh auf anderen Trägern, wie SiO₂ oder ZrO₂, zeigten geringere Umsätze.

DE 10 2011 111 307 beschreibt Katalysatoren zur Zersetzung von N₂O in sauerstoffhaltigen Gasen. Die Katalysatoren umfassen Rh als Metall auf einem Oxid oder Mischoxid mit sauerstoffspeichernden Eigenschaften (z. B. CeO₂ oder CeO₂-ZrO₂). Diese Katalysatoren zeigen Aktivität bei 180 bis 300 °C, allerdings nur bei sehr geringen N₂O Konzentrationen im Abgas (< 1 ppm).

DE 10 2009 023 877 offenbart geträgerte Katalysatoren umfassend eine aktive Metallkomponente auf einem porösen Trägermaterial sowie deren Verwendung zur Behandlung von Kraftstoffabgasen.

EP 1 503 855 offenbart Katalysatoren mit Trägern auf Basis von Zirkondioxid und ihre Verwendung für Dehydrierungen. Der Träger wird durch ein spezielles Verfahren hergestellt, wobei als Bindemittel eine Siliziumverbindung eingesetzt wird. Die Katalysatoren enthalten ein oder mehrere Elemente aus der VIII. oder VI. Nebengruppe und gegebenenfalls weitere Elemente. Diese Katalysatoren zeigen bei der Verwendung für Dehydrierungen bessere Eigenschaften als Katalysatoren vergleichbarer Zusammensetzung, welche keinen nach diesem speziellen Verfahren hergestellten Träger umfassen.

Eine Aufgabe der vorliegenden Erfindung bestand in der Bereitstellung eines Katalysators zur Zersetzung von Lachgas in Abgasströmen ohne Zusatz von Reduktionsmitteln bei deutlich niedrigeren Temperaturen als die im Stand der Technik bekannten Katalysatoren erlauben (bevorzugt unter 400 °C), wobei die Abgasströme auch Sauerstoff und/oder geringe Mengen Wasser enthalten können sollen.

Die Aufgabe wird gelöst durch einen Katalysator zur Zersetzung von Lachgas, welcher Rhodium (Rh) auf einem speziellen Träger aus SiO₂ und ZrO₂ enthält.

Gegenstand der Erfindung ist somit ein Katalysator zur Zersetzung von Lachgas, enthaltend Rhodium auf einem Katalysatorträger, wobei der Katalysatorträger hergestellt ist durch Vermischen von Zirkoniumdioxidpulver mit einer Siliziumverbindung als Bindemittel, gegebenenfalls einem Porenbildner, gegebenenfalls einer Säure, Wasser sowie gegebenenfalls weiteren Zuschlagstoffen zu einer knetbaren Masse, Homogenisierung der Masse, Formung der Masse zu Formkörpern, Trocknung und Kalzinierung, dadurch gekennzeichnet, dass das Bindemittel ausgewählt ist aus Siliziumverbindungen der den allgemeinen Formeln (I) bis (VI)

(Hal)ₓSiR₄₋ₓ (I)

(Hal)ₓSi(OR¹)₄₋ₓ (II)

(Hal)ₓSi(NR¹R²)₄₋ₓ (III)

RₓSi(OR¹)₄₋ₓ (IV)

RₓSi(NR¹R²)₄₋ₓ (V)

(R¹O)ₓSi(NR¹R²)₄₋ₓ (VI)

worin
- Hal: unabhängig voneinander Halogen (F, Cl, Br oder I),
- R: unabhängig voneinander H oder einen gegebenenfalls substituierten Alkyl-, Alkenyl-, Alkinyl-, Cycloalkyl-, Cycloalkenyl-, Arylalkyl- oder Arylrest,
- R¹, R²: unabhängig voneinander H oder einen gegebenenfalls substituierten Alkyl-, Acyl-, Arylalkyl- oder Arylrest, und
- x: 0 bis 4
bedeuten.

In einer bevorzugten Ausführungsform der Erfindung wird zur Herstellung des Katalysatorträgers ein Zirkoniumdioxidpulver mit einer Teilchengröße im Bereich von 0,2 bis 50 µm verwendet. In einer weiteren bevorzugten Ausführungsform der Erfindung wird zur Herstellung des Katalysatorträgers ein Zirkoniumdioxidpulver mit einer hohen spezifischen BET-Oberfläche, üblicherweise im Bereich von 10 bis 400 m²/g, besonders bevorzugt im Bereich von 50 bis 150 m²/g verwendet.

In einer weiteren bevorzugten Ausführungsform der Erfindung wird zur Herstellung des Katalysatorträgers im wesentlichen monoklines Zirkoniumdioxidpulver verwendet. Im wesentlichen monoklines Zirkoniumdioxidpulver, das zu 85 bis 100 Gew.-%, bevorzugt zu 90 bis 100 Gew.-% aus monoklinem Zirkoniumdioxid besteht, kann, wie in EP-A 0 716 883 beschrieben, durch Fällung von Zirkoniumsalzen mit Ammoniak hergestellt werden, indem man eine Zirkoniumnitrat- oder Zirkoniumchlorid-Lösung zu einer wässrigen Ammoniaklösung gibt, wobei der pH-Wert von 14 auf 6 absinkt, das Fällungsprodukt auswäscht, trocknet und kalziniert. Dazu stellt man zunächst aus Zirkoniumcarbonat und Salzsäure eine möglichst konzentrierte, in der Regel 2 bis 5 mol-%ige Zirkoniumchlorid-Lösung oder bevorzugt aus Zirkoniumcarbonat und Salpetersäure eine möglichst konzentrierte, in der Regel 2 bis 5 mol-%ige Zirkoniumnitrat-Lösung her. Diese Lösung wird in der Regel bei Temperaturen von 20 bis 60 °C unter Kontrolle des pH-Wertes zu einer vorgelegten wässrigen Ammoniak-Lösung (ca. 15 mol-% NH₃) zugegeben, wobei die Zugabe bei einem pH-Wert von 6 bis 8 beendet wird und der pH-Wert nicht unter 6 fallen darf. Daran schließt sich eine Nachrührzeit von im allgemeinen 30 bis 600 min an.

Das Fällungsprodukt wird beispielsweise auf einer Filterpresse ausgewaschen und von Ammoniumsalzen im wesentlichen befreit, getrocknet und bei einer Temperatur von 300 bis 600 °C, bevorzugt von 400 bis 500 °C und einem Druck von 0,05 bis 1 bar an Luft kalziniert.

Gelegentlich enthält das so hergestellte, im wesentlichen monokline Zirkoniumdioxid noch geringe Mengen der tetragonalen oder kubischen Modifikation. Den Anteil an der tetragonalen bzw. kubischen Modifikation kann man bis unter die röntgenographische Nachweisgrenze reduzieren, wenn vor der Kalzinierung eine Trocknung bei einem Wasserdampfpartialdruck von 0,2 bis 0,9 bar durchgeführt wird. Die Trocknung erfordert beispielsweise bei 120 °C ca. 16 Stunden.

Zur Herstellung der Träger der erfindungsgemäßen Katalysatoren werden Siliziumverbindungen als Bindemittel eingesetzt. Geeignete Bindemittel sind beispielsweise monomere, oligomere oder polymere Silane, Alkoxysilane, Aryloxyilane, Acyloxysilane, Oximinosilane, Halogensilane, Aminoxysilane, Aminosilane, Amidosilane, Silazane oder Silikone, wie sie beispielsweise in Ullmann's Encyclopedia of Industrial Chemistry, Vol. A24, auf den Seiten 21 bis 56 beschrieben sind. Insbesondere gehören dazu die monomeren Siliziumverbindung der nachstehenden allgemeinen Formeln (I) bis (VI):

(Hal)ₓSiR₄₋ₓ (I)

(Hal)ₓSi(OR¹)₄₋ₓ (II)

(Hal)ₓSi(NR¹R²)₄₋ₓ (III)

RₓSi(OR¹)₄₋ₓ (IV)

RₓSi(NR¹R²)₄₋ₓ (V)

(R¹O)ₓSi(NR¹R² )₄₋ₓ (VI)

worin
- Hal: unabhängig voneinander Halogen (F, Cl, Br oder I),
- R: unabhängig voneinander H oder einen gegebenenfalls substituierten Alkyl-, Alkenyl-, Alkinyl-, Cycloalkyl-, Cycloalkenyl-, Arylalkyl- oder Arylrest,
- R¹, R²: unabhängig voneinander H oder einen gegebenenfalls substituierten Alkyl-, Acyl-, Arylalkyl- oder Arylrest, und
- x: 0 bis 4
bedeuten.

R, R¹ und R² können H, einen Alkylrest, vorzugsweise einen C₁- bis C₆-Alkylrest, der linear oder verzweigt sein kann, bedeuten. Falls R ein Alkylrest ist, ist R insbesondere Methyl, Ethyl, n-Propyl, iso-Propyl, n-Butyl, sec.-Butyl oder tert.-Butyl, speziell Methyl oder Ethyl. R, R¹ und R² können weiterhin einen Arylrest, vorzugsweise Phenyl oder einen Arylalkylrest, vorzugsweise Benzyl, bedeuten.

R kann darüber hinaus einen Alkenylrest, vorzugsweise einen C₂-C₆-Alkenylrest, insbesondere Vinyl oder Allyl, oder einen Alkinylrest, vorzugsweise Ethinyl, bedeuten.

R¹ und R² können darüber hinaus einen Acylrest, vorzugsweise einen C₂-C₆-Acylrest, insbesondere einen Acetylrest, bedeuten.

Beispiele für geeignete Siliziumverbindungen der allgemeinen Formel (I) sind beispielsweise SiCl₄, MeSiCl₃, Me₂SiCl₂ und Me₃SiCl.

Geeignete Siliziumverbindungen der allgemeinen Formel (IV) sind beispielsweise Si(OEt)₄, MeSi(OEt)₃, Me₂Si(OEt)₂ und Me₃SiOEt.

Geeignete Verbindungen der allgemeinen Formel (V) sind beispielsweise Me₃Si(NMeCOMe) und Me₃Si(NMeCOCH₂C₆H₅).

Eine geeignete Verbindungen der allgemeinen Formel (VI) ist beispielsweise (MeO)₃SiNMe₂.

Beispiele für geeignete oligomere und polymere Organosiliciumverbindungen sind Methylsilikone und Ethylsilikone.

Ganz besonders bevorzugte Silizium-haltige Bindemittel sind Methylsilikone, beispielsweise die Silres®-Marken der Fa. Wacker.

Die als Bindemittel eingesetzten Siliziumverbindungen sind im Allgemeinen bei Raumtemperatur flüssig. Dadurch wird das hochoberflächige Zirkoniumdioxid beim Vermischen gleichmäßig mit der Siliziumverbindung benetzt, wodurch die Zirkoniumdioxidpartikel von der Siliziumverbindung umschlossen und teilweise durchtränkt werden. Daraus resultiert eine hohe Bindungsverstärkung zwischen den Zirkoniumdioxidpartikeln und eine sehr gute mechanische Stabilität der erhaltenen Katalysatorträger-Formkörper. Beim Kalzinieren der Katalysatorträger-Formkörper verbrennen u. a. die organischen Reste des Silizium-haltigen Bindemittels und es bildet sich Siliziumdioxid (SiO₂), welches in der Zirkoniumdioxidmatrix sehr fein verteilt vorliegt. Durch die Verbrennung der organischen Reste des Silizium-haltigen Bindemittels entstehen zusätzliche Poren. Diese Poren sind aufgrund der gleichmäßigen Verteilung des Bindemittels in der Zirkoniumdioxidmatrix ebenfalls sehr gleichmäßig verteilt. Dadurch wird die Gesamtporosität des Katalysatorträgers erhöht. Durch die Gegenwart von SiO₂ wird zudem eine Stabilisierung des Zirkoniumdioxids gegen thermische Sinterung bewirkt. Diese ist umso ausgeprägter, je gleichmäßiger das Siliziumdioxid verteilt ist.
Die Trägermaterialien der erfindungsgemäßen Katalysatoren enthalten im Allgemeinen SiO₂ im Bereich von etwa 1 bis 20 Gew.-%, bevorzugt im Bereich von etwa 3 bis 10 Gew.-%.

Bei der Herstellung der erfindungsgemäßen Katalysatoren vermischt man in einem ersten Schritt Zirkoniumdioxidpulver mit dem Silizium-haltigen Bindemittel, gegebenenfalls einem Porenbildner, gegebenenfalls einer Säure, Wasser sowie gegebenenfalls weiteren Zuschlagstoffen zu einer knetbaren Masse. Vorzugsweise werden
a) 50 bis 98 Gew.-% Zirkoniumdioxidpulver,
b) 2 bis 50 Gew.-%, besonders bevorzugt 5 bis 20 Gew.-% der Siliziumverbindung als Bindemittel,
c) 0 bis 48 Gew.-%, besonders bevorzugt 0 bis 10 Gew.-% Porenbildner, und
d) 0 bis 48 Gew.-%, besonders bevorzugt 0 bis 10 Gew.-% weitere Zuschlagstoffe,
wobei die Summe der Komponenten a) bis d) 100 Gew.-% ergibt.

Üblicherweise wird der Mischung aus dem Zirkoniumdioxidpulver und der Siliziumverbindung Wasser zugesetzt, um eine knetbare Masse zu erhalten. Ferner kann der Mischung auch eine Säure zugesetzt werden. Diese bewirkt eine Peptisierung der Knetmasse. Geeignete Säuren sind beispielsweise Salpetersäure und Essigsäure, bevorzugt ist Salpetersäure.

In einer bevorzugten Ausführungsform der Erfindung wird zur Herstellung des Katalysatorträgers ein Porenbildner verwendet. Geeignete Porenbildner sind beispielsweise Polyalkylenoxide wie Polyethylenoxid, Kohlenhydrate wie Zellulose und Zucker, Naturfasern, Pulp oder synthetische Polymere wie Polyvinylalkohol.

In einer weiteren bevorzugten Ausführungsform der Erfindung werden zur Herstellung des Katalysatorträgers weitere Zuschlagstoffe verwendet. Weitere Zuschlagstoffe sind beispielsweise bekannte, die Rheologie beeinflussende Verbindungen wie Hydroxymethylzellulose oder Polyalkylenoxide.

Zur Herstellung der Träger der erfindungsgemäßen Katalysatoren werden die genannten Komponenten in üblichen Mischapparaturen vermischt und homogenisiert. Geeignete Mischapparaturen sind beispielsweise Kneter, Kollergänge, Mix-Muller, die eine gute Durchmischung und Homogenisierung der anfangs inhomogenen knetbaren Masse gewährleisten. Anschließend wird die Katalysatorträger-Formmasse zu Formkörpern geformt, beispielsweise durch Extrudieren zu Strängen oder Hohlträgern.
Die Katalysatorträger-Formkörper werden üblicherweise anschließend getrocknet. Die Trocknung wird beispielsweise bei einer Temperatur von 90 bis 120 °C über einen Zeitraum von 10 bis 100 Stunden durchgeführt. Anschließend werden die getrockneten Katalysatorträger-Formkörper kalziniert. Die Kalzinierung wird üblicherweise bei einer Temperatur von 300 bis 800 °C, bevorzugt von 400 bis 600 °C über einen Zeitraum von 0,5 bis 6 Stunden durchgeführt. Die Kalzinierung wird vorzugsweise an Luft und bei Atmosphärendruck durchgeführt.

Die erfindungsgemäßen Katalysatoren enthalten auf dem Katalysatorträger Rhodium, bevorzugt in einer Menge von 0,01 bis 1,00 Gew.-% bezogen auf den fertigen Katalysator. In einer weiteren Ausführungsform der Erfindung enthält der Katalysator auf dem Katalysatorträger außer Rhodium noch weitere Elemente aus der III. Nebengruppe einschließlich der Lanthanide und/oder aus der VI. und/oder VIII. Nebengruppe des Periodensystems. In einer bevorzugten Ausführungsform der Erfindung enthält der Katalysator auf dem Katalysatorträger außer Rhodium noch Eisen, Chrom und/oder Molybdän, wobei Molybdän besonders bevorzugt ist. In einer besonders bevorzugten Ausführungsform der Erfindung enthält der Katalysator auf dem Katalysatorträger 0,01 bis 1,00 Gew.-% Rhodium und 0,01 bis 0,50 Gew.% Molybdän.

Das Rhodium und die gegebenenfalls vorhandenen weiteren Elemente werden in der Regel durch Tränkung mit wässrigen Lösungen geeigneter Verbindungen der betreffenden Metalle aufgebracht. Geeignete Verbindungen sind solche, die sich in Wasser lösen und durch Kalzinieren in das entsprechende Metalloxid umwandeln lassen. Das oder die Metallverbindung(en) können auch aufgesprüht werden. Geeignete Metallsalze sind beispielsweise die Nitrate, Acetate und Chloride der Metalle, möglich sind auch komplexe Anionen der Metalle. Vorzugsweise werden Rhodiumnitrat oder -acetat zum Aufbringen von Rhodium und Cr(NO₃)₃ oder (NH₄)2CrO₄ zum Aufbringen von Chrom eingesetzt.

Die Kalzinierung der mit den betreffenden Metallsalzlösungen imprägnierten Katalysatorträger erfolgt üblicherweise bei einer Temperatur von 350 bis 650 °C über einen Zeitraum von 0,5 bis 6 Stunden.

Ein weiterer Gegenstand der vorliegenden Erfindung ist ein Verfahren zur Herstellung der oben beschriebenen Katalysatoren zur Zersetzung von Lachgas, bei dem man einen Katalysatorträger, hergestellt durch Vermischen von Zirkoniumdioxidpulver mit einer Siliziumverbindung als Bindemittel, gegebenenfalls einem Porenbildner, gegebenenfalls einer Säure, Wasser sowie gegebenenfalls weiteren Zuschlagstoffen zu einer knetbaren Masse, Homogenisierung der Masse, Formung der Masse zu Formkörpern, Trocknung und Kalzinierung, wobei das Bindemittel ausgewählt ist aus Siliziumverbindungen der den allgemeinen Formeln (I) bis (VI)

(Hal)ₓSiR₄₋ₓ (I)

(Hal)ₓSi(OR¹)₄₋ₓ (II)

(Hal)ₓSi(NR¹R²)₄₋ₓ (III)

RₓSi(OR¹)₄₋ₓ (IV)

RₓSi(NR¹R²)₄₋ₓ (V)

(R¹O)ₓSi(NR¹R²)₄₋ₓ (VI)

worin
- Hal: unabhängig voneinander Halogen (F, Cl, Br oder I),
- R: unabhängig voneinander H oder einen gegebenenfalls substituierten Alkyl-, Alkenyl-, Alkinyl-, Cycloalkyl-, Cycloalkenyl-, Arylalkyl- oder Arylrest,
- R¹, R²: unabhängig voneinander H oder einen gegebenenfalls substituierten Alkyl-, Acyl-, Arylalkyl- oder Arylrest, und
- x: 0 bis 4
bedeuten, mit einer Rhodium-haltigen Lösung tränkt, anschließend trocknet und kalziniert.

Ein weiterer Gegenstand der vorliegenden Erfindung ist die Verwendung der oben beschriebenen Katalysatoren zur Zersetzung von Lachgas. Diese Verwendung erfolgt vorzugsweise bei einer Betriebstemperatur des Katalysators im Bereich von 250 bis 700 °C, bevorzugt im Bereich von 300 bis 430 °C und besonders bevorzugt im Bereich von 350 bis 425 °C. Der Gasstrom, der über den Katalysator geleitet wird, enthält bevorzugt bis zu 20000 ppm, besonders bevorzugt bis zu 5000 ppm N₂O und kann daneben auch noch bis zu 2000 ppm NOₓ, bis zu 1 % H₂O und/oder bis zu 5 % O₂ enthalten.

Eine weitere bevorzugte Ausführungsform der Erfindung ist die Verwendung der oben beschriebenen Katalysatoren zur Zersetzung von Lachgas bei der Herstellung von Salpetersäure oder Caprolactam.

Die Erfindung wird durch die nachstehenden Beispiele näher erläutert.

### Beispiele:

### Beispiel 1: Herstellung des Katalysatorträgers

3680 g ZrO₂-Pulver wurden 3 Stunden bei 450 °C getempert und dann mit 262,6 g Methoxysilan (Silres MSE 100 der Fa. Wacker), 110,4 g Polyethylenoxid (Alkox E100), 110,4 g 65 Gew.-%iger HNO₃ und 1270 g Wasser 20 Minuten lang in einem Kollergang vermischt. Die resultierende teigige Masse wurde in einem Schneckenextruder zu Strängen mit 3 mm Außendurchmesser geformt, die Stränge bei 120 °C getrocknet und anschließend 4 Stunden lang bei 560 °C getempert. Der erhaltene Träger wies eine BET-Oberfläche von 95 m²/g und eine Porosität von 0,36 ml/g (gemessen mit Quecksilber-Porosimetrie) auf und besaß eine bimodale Porendurchmesserverteilung mit Maxima bei 20 und 450 nm. Die Schneidehärte des Trägers betrug 35 N.

### Beispiel 2: Herstellung des Katalysators (Rh/ZrO₂/SiO₂)

3,37 g wässrige Rhodiumnitratlösung (13,7 Gew.-%, Fa. Haereus, entspricht 0,461 g Rh) wurden mit Wasser auf 101 ml aufgefüllt. 230 g Trägermaterial (1,5 mm Stränge aus Beispiel 1) wurden im Kolben vorgelegt, die Tränklösung zugegeben und 30 min stehen gelassen, dabei alle 5 min umgeschüttelt. Danach wurde die überstehende Lösung am Rotationsverdampfer abgezogen. Anschließend wurde unter Vakuum 16 Stunden lang bei 125 °C getrocknet und dann bei 540°C/4h/100 Nl/h N₂ im Drehrohrofen kalziniert, anschließend mit Luft passiviert. Die Stränge enthielten 0,20 Gew.-% Rh.

### Beispiel 3 und 4:

Herstellung analog Beispiel 2 mit 8,65 bzw. 11,13 g Rhodiumnitratlösung (34 Gew.-%, BASF Italia). Die Stränge enthielten 0,32 bzw. 0,42 Gew.-% Rh.

### Beispiel 5: Herstellung des Katalysators (Mo/Rh/ZrO₂/SiO₂)

3,37 g Rhodiumnitratlösung (13,7 Gew.-%, Fa. Haereus, entspricht 0,461 g Rh) und 4,61 ml Mo-ICP-Lösung (Fa. ABCR 1 g Mo in 5%iger HNO₃, entspricht 0,0461 g Mo) wurden gemischt und mit Wasser auf 101 ml aufgefüllt. 230g Trägermaterial (1.5 mm Stränge aus Beispiel 1) wurden in einem Kolben vorlegt, die Tränklösung zugegeben und 30 min stehen lassen, dabei alle 5 min umschütteln. Danach wurde überstehendes Wasser im Wasserstrahlpumpenvakuum (20 mbar) bei einer Wasserbadtemperatur von 85 °C abgezogen. Anschließend wurde bei 125°C unter Vakuum für 16h getrocknet und dann bei 540°C/4h/100 Nl/h N₂ im Drehrohrofen kalziniert, anschließend mit Luft passiviert. Die Stränge hatten einen Rh-Gehalt von 0,20 Gew.-% und einen Mo-Gehalt von 0,02 Gew.-%.

### Beispiel 6:

Herstellung analog Beispiel 5 mit 0,231g Mo (0,39 g H₂MoO4 in 10ml 2M HNO₃) und 3,37 g Rhodiumnitratlösung (13,7 Gew.-%, Fa. Haereus, entspricht 0,461 g Rh) aufgefüllt auf 101 ml Wasser. Die Stränge hatten einen Rh-Gehalt von 0,20 Gew.-% und einen Mo-Gehalt von 0,10 Gew.-%.

### Vergleichsbeispiele 1-5:

110 g Trägermaterial wurden mit 47 ml Precursorlösung getränkt. Die weitere Präparation erfolgte analog Beispiel 2. Als Precursoren wurden verwendet: IrCl₃ x H₂O (mit 9 ml HCl gelöst), Pd(NO₃)₂, RuCl₃ x H₂O, Fe(NO₃)₃ x 9 H₂O, Pt-A-Lösung (eine mit Amin verdünnte wässrige Platinhydroxid- (H₂Pt(OH)₆) Lösung.

### Vergleichsbeispiele 6-11:

Die Katalysatoren wurden analog Beispiel 2 hergestellt. Anstelle des Trägers aus Beispiel 1 wurden folgende Träger verwendet: tetragonales ZrO₂ mit 4,2 Gew.-% Si (Saint-Gobain NorPro SZ 61152, monoklines ZrO₂ mit 5,0 Gew.-% Si (Saint-Gobain Norpro SZ31107), pures vorwiegend monoklines ZrO₂, SiO₂, γ-Al₂O₃ und CeO₂.

### Lachgaszersetzung:

23 g (20 ml) des Katalysators wurden in einen vertikal stehenden 230 ml Rohrreaktor mit einem Innendurchmesser 25 mm mit einem 3 mm Innenrohr für das Thermoelement gefüllt. Der Katalysator wurde mittig ins Rohr gefüllt, darunter und darüber wurden 1 bis 1,5 mm Quarzglassplitt gefüllt. Der Rohrrektor wurde mit einem elektrischen Ofen beheizt und die Temperatur im Katalysatorbett in der Mitte des Katalysatorbettes mit einem Thermoelement gemessen. Ein Gasgemisch bestehend aus 3% O₂, 1000 ppm N₂O, 3000 ppm H₂O, 96,6% N₂, wurde mit einer GHSV von 20000 h⁻¹ und einem Druck von 8 bar über den Katalysator geleitet und die Reaktionsgase mittels Infrarotspektroskopie analysiert.

Tabelle 1 enthält die Ergebnisse für erfindungsgemäße Katalysatoren gemäß den Beispielen 2 bis 6 (B2 bis B6) und die Vergleichsbeispiele 1 bis 11 (VB1 bis VB11).

**Tabelle 1: X = Umsatz N₂O**

| B2: 0,20% Rh | | | | |
|---|---|---|---|---|
| T[°C] | 289 | 309 | 325 | 361 |
| X [%] | 0 | 1,9 | 5,8 | 25 |

| B3: 0,32% Rh | | | | |
|---|---|---|---|---|
| T[°C] | 289 | 309 | 327 | 361 |
| X [%] | 2,4 | 9,1 | 26 | 71,2 |

| B4: 0,42% Rh | | | | |
|---|---|---|---|---|
| T[°C] | 287 | 308 | 325 | 361 |
| X [%] | 2,9 | 13,6 | 33 | 73,8 |

| B5: 0,20 % Rh 0,02 % Mo | | | | |
|---|---|---|---|---|
| T[°C] | 289 | 308 | 326 | 360 |
| X [%] | 0 | 2,9 | 11,5 | 37,5 |

| B6: 0,20 % Rh 0,10 % Mo | | | | |
|---|---|---|---|---|
| T[°C] | 288 | 306 | 324 | 359 |
| X [%] | 0 | 3 | 9,1 | 32,2 |

| VB1: 0,38% Ir | | | | |
|---|---|---|---|---|
| T[°C] | 285 | 307 | 325 | 359 |
| X [%] | 0 | 1 | 1,9 | 6,7 |

| VB2: 0,40% Pd | | | | |
|---|---|---|---|---|
| T[°C] | 284 | 305 | 322 | 356 |
| X [%] | 0 | 0 | 3 | 8 |

| VB3: 0,47% Ru | | | | |
|---|---|---|---|---|
| T[°C] | 256 | 283 | 299 | 329 |
| X [%] | 0 | 0 | 2 | 5 |

| VB4: 0,49% Fe | | | | |
|---|---|---|---|---|
| T[°C] | 287 | 307 | 325 | 359 |
| X [%] | 0 | 0 | 0 | 0 |

| VB5: 0,45% Pt | | | | |
|---|---|---|---|---|
| T[°C] | 283 | 305 | 324 | 357 |
| X [%] | 0 | 0 | 0 | 1,6 |

| VB6 :0,33 % Rh ZrO₂-SiO₂ | | | | |
|---|---|---|---|---|
| T[°C] | 292 | 316 | 335 | 371 |
| X [%] | 1 | 4 | 10 | 36,5 |

| VB7: 0,34 % Rh ZrO₂-SiO₂ tetragonal | | | | |
|---|---|---|---|---|
| T[°C] | 278 | 304 | 321 | 357 |
| X [%] | 0 | 1 | 4,8 | 8,7 |

| VB8: 0,33 % Rh ZrO₂ monoklin | | | | |
|---|---|---|---|---|
| T[°C] | 266 | 293 | 320 | 350 |
| X [%] | 0 | 0 | 1,1 | 5,9 |

| VB9: 0,33 % Rh SiO₂ | | | | |
|---|---|---|---|---|
| T[°C] | 266 | 292 | 319 | 349 |
| X [%] | 0 | 1 | 2,8 | 9,6 |

| VB10: 0,33 % Rh Al₂O₃ | | | | |
|---|---|---|---|---|
| T[°C] | 294 | 315 | 333 | 368 |
| X [%] | 0 | 1,1 | 4,1 | 12 |

| VB11: 0,33 % Rh CeO₂ | | | | |
|---|---|---|---|---|
| T[°C] | 269 | 296 | 323 | 350 |
| X [%] | 0 | 3,6 | 16,6 | 46,8 |

Rh auf erfindungsgemäß hergestelltem ZrO₂/SiO₂ Träger zeigte einen höheren Umsatz als andere Metalle auf diesem Träger. Rh auf erfindungsgemäß hergestelltem ZrO₂/SiO₂ Träger zeigte einen höheren Umsatz Rh auf anderen Trägern.

Die Versuche zur Lachgaszersetzung wurden mit 1000 ppm NO im Gasgemisch wiederholt.

| Metallgehalt [%] | 0,20 Rh | 0,32 Rh | 0,42 Rh | 0,38 Ir | 0,4 Pd | 0,47 Ru | 0,49 Fe | 0,45 Pt | 0,20 Rh 0,02 Mo | 0,20 Rh 0,10 Mo |
|---|---|---|---|---|---|---|---|---|---|---|
| Temperatur [°C] | 361 | 361 | 360 | 359 | 356 | 331 | 359 | 359 | 357 | 358 |
| Umsatz [%] | 4,8 | 15,4 | 17,5 | 11,5 | 0 | 3,0 | 0 | 1,0 | 6,3 | 7,1 |

Die Zersetzung von N₂O wird durch den Zusatz von NOx im Gasgemisch erheblich behindert. Allerdings zeigten die erfindungsgemäßen Katalysatoren einen deutlich höheren Umsatz im Vergleich zu den Katalysatoren mit anderen Metallen.
Der Zusatz von einer kleinen Menge Molybdän wirkte sich auch positiv auf die Performance mit NOx im Gasgemisch aus. Die Katalysatoren mit 0,10 bzw. 0,02 Gew.-% Mo zeigten bei gleicher Temperatur einen höheren Umsatz als Katalysatoren nur mit Rh.

**Tabelle mit Katalysatoranalytik:**

| Katalysatorträger | BET [m²/g] | Porenvolumen [cm³/g] | Si-Gehalt |
|---|---|---|---|
| erfindungsgemäß | 95 | 0,30 | 7,3% |
| SiO₂-ZrO₂ tetragonal Saint-Gobain NorPro SZ 61152 | 141 | 0,33 | 4,2% |
| SiO₂-ZrO₂ monoklin Saint-Gobain NorPro SZ 31107 | 100 | 0,33 | 5,0% |
| Al₂O₃ | 216 | 0,69 | 0% |

## Patentansprüche

1. Katalysator zur Zersetzung von Lachgas, enthaltend Rhodium auf einem Katalysatorträger, wobei der Katalysatorträger hergestellt ist durch Vermischen von Zirkoniumdioxidpulver mit einer Siliziumverbindung als Bindemittel, gegebenenfalls einem Porenbildner, gegebenenfalls einer Säure, Wasser sowie gegebenenfalls weiteren Zuschlagstoffen zu einer knetbaren Masse, Homogenisierung der Masse, Formung der Masse zu Formkörpern, Trocknung und Kalzinierung, **dadurch gekennzeichnet, dass** das Bindemittel ausgewählt ist aus Siliziumverbindungen mit den allgemeinen Formeln (I) bis (VI)
(Hal)ₓSiR₄₋ₓ (I)
(Hal)ₓSi(OR¹)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R¹O)ₓSi(NR¹R²)₄₋ₓ (VI)
worin
Hal unabhängig voneinander Halogen (F, Cl, Br oder I),
R unabhängig voneinander H oder einen gegebenenfalls substituierten Alkyl-, Alkenyl-, Alkinyl-, Cycloalkyl-, Cycloalkenyl-, Arylalkyl- oder Arylrest,
R¹, R² unabhängig voneinander H oder einen gegebenenfalls substituierten Alkyl-, Acyl-, Arylalkyl- oder Arylrest, und
x 0 bis 4
bedeuten.

2. Katalysator nach Anspruch 1, **dadurch gekennzeichnet, dass** zur Herstellung des Katalysatorträgers
a) 50 bis 98 Gew.-% Zirkoniumdioxidpulver,
b) 2 bis 50 Gew.-% der Siliziumverbindung als Bindemittel,
c) 0 bis 48 Gew.-% Porenbildner und
d) 0 bis 48 Gew.-% weitere Zuschlagstoffe,
wobei die Summe der Komponenten a) bis d) 100 Gew.-% ergibt, unter Zusatz von Wasser und gegebenenfalls einer Säure zu einer knetbaren Masse vermischt werden.

3. Katalysator nach Anspruch 1 oder 2, **dadurch gekennzeichnet, dass** das Zirkoniumdioxidpulver im wesentlichen aus monoklinem Zirkoniumdioxid besteht.

4. Katalysator nach einem der Ansprüche 1 bis 3, **dadurch gekennzeichnet, dass** Zirkoniumdioxidpulver eine Teilchengröße im Bereich von 0,2 bis 50 µm hat.

5. Katalysator nach einem der Ansprüche 1 bis 4, **dadurch gekennzeichnet, dass** Zirkoniumdioxidpulver eine spezifische BET-Oberfläche im Bereich von 10 bis 400 m²/g hat.

6. Katalysator nach einem der Ansprüche 1 bis 5, **dadurch gekennzeichnet, dass** der Katalysator auf dem Katalysatorträger noch weitere Elemente aus der III. Nebengruppe einschließlich der Lanthanide und/oder aus der VI. und/oder VIII. Nebengruppe des Periodensystems enthält.

7. Katalysator nach einem der Ansprüche 1 bis 5, **dadurch gekennzeichnet, dass** der Katalysator auf dem Katalysatorträger noch Molybdän enthält.

8. Verfahren zur Herstellung von Katalysatoren zur Zersetzung von Lachgas, bei dem man einen Katalysatorträger, hergestellt durch Vermischen von Zirkoniumdioxidpulver mit einer Siliziumverbindung als Bindemittel, gegebenenfalls einem Porenbildner, gegebenenfalls einer Säure, Wasser sowie gegebenenfalls weiteren Zuschlagstoffen zu einer knetbaren Masse, Homogenisierung der Masse, Formung der Masse zu Formkörpern, Trocknung und Kalzinierung, wobei das Bindemittel ausgewählt ist aus Siliziumverbindungen der den allgemeinen Formeln (I) bis (VI)
(Hal)ₓSiR₄₋ₓ (I)
(Hal)ₓSi(OR¹)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R'O)ₓSi(NR¹R²)₄₋ₓ (VI)
worin
Hal unabhängig voneinander Halogen (F, Cl, Br oder I),
R unabhängig voneinander H oder einen gegebenenfalls substituierten Alkyl-, Alkenyl-, Alkinyl-, Cycloalkyl-, Cycloalkenyl-, Arylalkyl- oder Arylrest,
R¹, R² unabhängig voneinander H oder einen gegebenenfalls substituierten Alkyl-, Acyl-, Arylalkyl- oder Arylrest, und
x 0 bis 4
bedeuten, mit einer Rhodium-haltigen Lösung tränkt, anschließend trocknet und kalziniert.

9. Verwendung von Katalysatoren nach einem der Ansprüche 1 bis 7 zur Zersetzung von Lachgas.

10. Verwendung nach Anspruch 9, wobei der Gasstrom, der über den Katalysator geleitet wird, bis zu 20000 ppm N₂O und daneben gegebenenfalls noch bis zu 2000 ppm NOₓ, bis zu 1 % H₂O und/oder bis zu 5 % O₂ enthält.

## Claims

1. A nitrous oxide decomposition catalyst comprising rhodium on a catalyst carrier, wherein the catalyst carrier is obtained by mixing zirconium dioxide powder with a silicon compound as binder, optionally a porogen, optionally an acid, water and optionally also further additives to form a kneadable composition, homogenizing the composition, shaping the composition into shaped bodies, drying and calcination, wherein the binder is selected from silicon compounds of general formulae (I) to (VI)
(Hal)xSiR4-x (I)
(Hal)ₓSi(OR²)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R¹O)ₓSi(NR¹R²)₄₋ₓ (VI)
where
Hal in each occurrence is independently halogen (F, Cl, Br or I),
R in each occurrence is independently H or a substituted or unsubstituted alkyl, alkenyl, alkynyl, cycloalkyl, cycloalkenyl, arylalkyl or aryl radical,
R¹ and R² in each occurrence are each independently H or a substituted or unsubstituted alkyl, acyl, arylalkyl or aryl radical, and
x is from 0 to 4.

2. The catalyst according to claim 1 wherein the catalyst carrier is prepared by mixing
a) 50 to 98 wt% of zirconium dioxide powder,
b) 2 to 50 wt% of the silicon compound as binder,
c) 0 to 48 wt% of porogen, and
d) 0 to 48 wt% of further additives,
wherein the sum total of components a) to d) adds up to 100 wt%, in the presence of water and optionally of an acid to form a kneadable composition.

3. The catalyst according to claim 1 or 2 wherein the zirconium dioxide powder consists essentially of monoclinic zirconium dioxide.

4. The catalyst according to any one of claims 1 to 3 wherein zirconium dioxide powder has a particle size in the range from 0.2 to 50 µm.

5. The catalyst according to any one of claims 1 to 4 wherein zirconium dioxide powder has a specific BET surface area in the range from 10 to 400 m²/g.

6. The catalyst according to any one of claims 1 to 5 wherein the catalyst on the catalyst carrier comprises yet further elements from transition group III including the lanthanides and/or from transition groups VI and/or VIII of the periodic table.

7. The catalyst according to any one of claims 1 to 5 wherein the catalyst on the catalyst carrier further comprises molybdenum.

8. A method of preparing nitrous oxide decomposition catalysts, which comprises a catalyst carrier obtained by mixing zirconium dioxide powder with a silicon compound as binder, optionally a porogen, optionally an acid, water and optionally also further additives to form a kneadable composition, homogenizing the composition, shaping the composition into shaped bodies, drying and calcination, wherein the binder is selected from silicon compounds of general formulae (I) to (VI)
(Hal)ₓSiR₄₋ₓ (I)
(Hal)ₓSi(OR¹)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R¹O)ₓSi(NR¹R²)₄₋ₓ (VI)
where
Hal in each occurrence is independently halogen (F, Cl, Br or I),
R in each occurrence is independently H or a substituted or unsubstituted alkyl, alkenyl, alkynyl, cycloalkyl, cycloalkenyl, arylalkyl or aryl radical,
R¹ and R² in each occurrence are each independently H or a substituted or unsubstituted alkyl, acyl, arylalkyl or aryl radical, and
x is from 0 to 4,
being impregnated with a rhodium-containing solution, then dried and calcined.

9. A method of using catalysts according to any one of claims 1 to 7 for decomposition of nitrous oxide.

10. The method according to claim 9 wherein the gas stream passed over the catalyst comprises up to 20 000 ppm of N₂O with or without up to 2000 ppm of NOₓ, up to 1% of H₂O and/or up to 5% of O₂.

## Revendications

1. Catalyseur pour la décomposition de gaz hilarant, contenant du rhodium sur un support de catalyseur, le support de catalyseur étant fabriqué par mélange d'une poudre de dioxyde de zirconium avec un composé de silicium en tant que liant, éventuellement un agent de formation de pores, éventuellement un acide, de l'eau et éventuellement d'autres additifs pour former une masse malaxable, homogénéisation de la masse, façonnage de la masse en corps moulés, séchage et calcination, **caractérisé en ce que** le liant est choisi parmi les composés de silicium des formules générales (I) à (VI) :
(Hal)ₓSiR₄₋ₓ (I)
(Hal)ₓSi(OR¹)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R¹O)ₓSi(NR¹R²)₄₋ₓ (VI)
dans lesquelles
les Hal signifient indépendamment les uns des autres un halogène (F, Cl, Br ou I),
les R signifient indépendamment les uns des autres H ou un radical alkyle, alcényle, alcynyle, cycloalkyle, cycloalcényle, arylalkyle ou aryle éventuellement substitué,
les R¹, R² signifient indépendamment les uns des autres H ou un radical alkyle, acyle, arylalkyle ou aryle éventuellement substitué,
x signifie 0 à 4.

2. Catalyseur selon la revendication 1, **caractérisé en ce que**, pour la fabrication du support de catalyseur,
a) 50 à 98 % en poids d'une poudre de dioxyde de zirconium,
b) 2 à 50 % en poids du composé de silicium en tant que liant,
c) 0 à 48 % en poids d'un agent de formation de pores, et
d) 0 à 48 % en poids d'autres additifs,
la somme des composants a) à d) étant de 100 % en poids, sont mélangés avec ajout d'eau et éventuellement d'un acide pour former une masse malaxable.

3. Catalyseur selon la revendication 1 ou 2, **caractérisé en ce que** la poudre de dioxyde de zirconium est essentiellement constituée par du dioxyde de zirconium monoclinique.

4. Catalyseur selon l'une quelconque des revendications 1 à 3, **caractérisé en ce que** la poudre de dioxyde de zirconium a une taille de particule dans la plage allant de 0,2 à 50 µm.

5. Catalyseur selon l'une quelconque des revendications 1 à 4, **caractérisé en ce que** la poudre de dioxyde de zirconium a une surface BET spécifique dans la plage allant de 10 à 400 m²/g.

6. Catalyseur selon l'une quelconque des revendications 1 à 5, **caractérisé en ce que** le catalyseur contient sur le support de catalyseur des éléments supplémentaires du groupe de transition III, y compris les lanthanides, et/ou du groupe de transition VI et/ou VIII du tableau périodique.

7. Catalyseur selon l'une quelconque des revendications 1 à 5, **caractérisé en ce que** le catalyseur contient en outre du molybdène sur le support de catalyseur.

8. Procédé de fabrication de catalyseurs pour la décomposition de gaz hilarant, selon lequel un support de catalyseur, fabriqué par mélange d'une poudre de dioxyde de zirconium avec un composé de silicium en tant que liant, éventuellement un agent de formation de pores, éventuellement un acide, de l'eau, ainsi qu'éventuellement d'autres additifs pour former une masse malaxable, homogénéisation de la masse, façonnage de la masse en corps moulés, séchage et calcination, le liant étant choisi parmi les composés de silicium des formules générales (I) à (VI) :
(Hal)ₓSiR₄₋ₓ (I)
(Hal)ₓSi(OR¹)₄₋ₓ (II)
(Hal)ₓSi(NR¹R²)₄₋ₓ (III)
RₓSi(OR¹)₄₋ₓ (IV)
RₓSi(NR¹R²)₄₋ₓ (V)
(R¹O)ₓSi(NR¹R²)₄₋ₓ (VI)
dans lesquelles
les Hal signifient indépendamment les uns des autres un halogène (F, Cl, Br ou I),
les R signifient indépendamment les uns des autres H ou un radical alkyle, alcényle, alcynyle, cycloalkyle, cycloalcényle, arylalkyle ou aryle éventuellement substitué,
les R¹, R² signifient indépendamment les uns des autres H ou un radical alkyle, acyle, arylalkyle ou aryle éventuellement substitué, et
x signifie 0 à 4,
est imprégné avec une solution contenant du rhodium, puis séché et calciné.

9. Utilisation de catalyseurs selon l'une quelconque des revendications 1 à 7 pour la décomposition de gaz hilarant.

10. Utilisation selon la revendication 9, dans laquelle le courant gazeux qui est acheminé sur le catalyseur contient jusqu'à 20 000 ppm de N₂O et en outre éventuellement jusqu'à 2 000 ppm de NOₓ, jusqu'à 1 % d'H₂O et/ou jusqu'à 5 % d'O₂.
